## Europäisches Patentamt
## European Patent Office
## Office européen des brevets

(11) Veröffentlichungsnummer: **0 095 701 B1**

---

(12) # EUROPÄISCHE PATENTSCHRIFT

(45) Veröffentlichungstag der Patentschrift:
17.09.86

(51) Int. Cl.⁴: **G 03 B 27/58**, G 03 G 15/00, B 65 H 3/14

(21) Anmeldenummer: 83105110.7

(22) Anmeldetag: 24.05.83

---

(54) **Belichtungsstation.**

---

(30) Priorität: 01.06.82 US 383896

(43) Veröffentlichungstag der Anmeldung:
07.12.83 Patentblatt 83/49

(45) Bekanntmachung des Hinweises auf die Patenterteilung:
17.09.86 Patentblatt 86/38

(84) Benannte Vertragsstaaten:
AT BE CH DE FR GB IT LI NL SE

(56) Entgegenhaltungen:
AU - A - 82 737
DE - A - 2 706 412
FR - A - 2 338 213
US - A - 3 504 910
US - A - 3 610 577
US - A - 4 175 857

RESEARCH DISCLOSURE, Nr. 21139, November 1981, R.S. MUKA. "Document feeder with improved vacuum system", Seiten 413-415

(73) Patentinhaber: **THE GERBER SCIENTIFIC INSTRUMENT COMPANY**, 83 Gerber Road, South Windsor, CT 06074 (US)

(72) Erfinder: **Smith, Vernon W., 14356 Brenan Way, Tustin California 92680 (US)**

(74) Vertreter: **Patentanwälte Kohler - Schwindling - Späth, Hohentwielstrasse 41, D-7000 Stuttgart 1 (DE)**

---

**Beschreibung**

Die Erfindung betrifft eine Belichtungsstation für fotoempfindliche Materialien, mit einem Belichtungstisch und mit einer Blattspendevorrichtung, die einen rechteckigen Blattbehälter aufweist, dessen Vorder-, Rück- und Seitenwände die Behälterumrandung bilden, mit einem höhenverstellbaren Boden, der innerhalb der Behälterumrandung anheb- und absenkbar ist.

Im allgemeinen sind die zu belichtenden Materialien gestapelt und werden von dem Stapel abgetrennt und aufeinanderfolgend als einzelne Blätter zu einem Belichtungstisch transportiert. Die Erfindung betrifft insbesondere die aerodynamische Vereinzelung und den Transport der Blätter einzeln zu einer weiteren Bearbeitungsstation, beispielsweise zum Belichtungstisch in der Belichtungsstation. Das einzelne Blatt kann dann in der Bearbeitungsstation für nachfolgende Operationen genau positioniert werden.

Aus der US-A 3 610 577 ist eine Blattzufuhrvorrichtung bekannt, die oberhalb eines umlaufenden endlosen, gelochten Transportbandes ein ortsfestes Gebläse aufweist, welches das Transportband mit Unterdruck beaufschlagt, so dass das oberste Blatt eines Stapels, der sich auf einer Plattform befindet, an die Unterseite des Transportbandes angesaugt wird. Das Transportband läuft innerhalb eines Ansaugraumes um, der von Seitenwänden eingeschlossen ist. Diese Blattzufuhrvorrichtung besitzt eine automatisch höhenverstellbare Plattform, die unterhalb des Transportbandes vertikal verstellbar ist. Der von dem Gebläse erzeugte Unterdruck ist stark genug, um das oberste Blatt von einem Stapel von kartonartigen Blättern zu heben und des weiteren sind Transporteinrichtungen vorhanden, welche ein derartiges Blatt in bezug auf die ursprüngliche Plattformposition horizontal weiterbefördern.

Im Stand der Technik ist es auch bekannt, Blätter aerodynamisch voneinander zu trennen und mit Hilfe von Luftdüsen entlang einem vorgegebenen Führungsweg zu bewegen. Ein Luftkissen mit unterschiedlichen Drücken an jeder Seite des Blattes bewerkstelligt das erforderliche Anheben und liefert den Strömungswiderstand, um die Blätter in die gewünschte Richtung zu transportieren.

Aufgabe der Erfindung ist es, eine Belichtungsstation zu schaffen, die eine Blattspendevorrichtung und einen Belichtungstisch umfasst, und bei der die zu belichtenden Blätter einzeln von einem Stapel abgelöst und die Zufuhr und der Weitertransport des einzelnen Blattes zu oder von dem Belichtungstisch aerodynamisch so gesteuert werden, dass ein gleichzeitiger Doppel- oder Mehrfachtransport von Blättern vermieden wird.

Diese Aufgabe wird erfindungsgemäss dadurch gelöst, dass an der Vorderwand des Blattbehälters ein Vorsprung angebracht ist, der in das Innere des Behälters teilweise hineinragt, dass eine Leitplatte für einen Luftstrom im Abstand sowie parallel und oberhalb zu der obersten Ebene des Behälters geführt ist, dass die Leitplatte an ihrem hinteren Teil einen Blatthalteanschlag und an der Unterseite zumindest eine nach hinten und zumindest eine nach vorne gerichtete Luftdüse aufweist, dass der Vorsprung und der Vorderteil der Leitplatte eine Austrittsbahn für die im Behälter gestapelten Blätter bilden, und dass eine Einrichtung zum Vereinzeln und Trennen der Blätter eines Stapels in dem Behälter vorhanden ist.

In Ausgestaltung der Erfindung weist der Belichtungstisch, der ein von der Austrittsbahn kommendes Blatt aufnimmt, eine rechteckförmige Belichtungsplatte mit einer Anzahl von Durchlässen auf, tastet ein Belichtungsstrahl die oberste Ebene des Belichtungstisches senkrecht ab, verschieben Einrichtungen den Belichtungstisch eine vorgegebene Strecke senkrecht zu dem Strahlenpfad hin und her, erzeugt eine Einrichtung ein Vakuum oder einen Luftstrom durch die Durchlässe hindurch zum Ansaugen oder Abheben eines Blattes und ist eine Luftdüsen tragende Platte oberhalb und parallel zur Ebene des Belichtungstisches angeordnet und weist eine Anzahl der zu der Unterseite der Platte hin offenen Luftdüsen auf, die ein Blatt in zueinander senkrechten Richtungen auf der Belichtungsplatte in eine vorgegebene Position bewegen und das Blatt durch einen Austrittsdurchlass befördern können.

In vorteilhafter Weiterbildung der Erfindung sind Einrichtungen zum Stanzen von Löchern in dem Blatt, Sensoren zum Feststellen der Position des Blattes, Einrichtungen zum aufeinanderfolgenden Beaufschlagen mit Luftdruck und/oder Vakuum durch die Luftdüsen und die Durchlässe vorhanden, und des weiteren eine Einrichtung zum Vereinzeln und Trennen der Blätter eines Stapels in dem Behälter.

Die Erfindung löst das gestellte Problem in der Weise, dass zuerst das oberste Blatt eines Blattstapels in eine entgegengesetzte Richtung zu der gewünschten Transportrichtung bis zum Erreichen eines Stopanschlags bewegt wird und anschliessend die Bewegungsrichtung in die gewünschte Transportrichtung umgekehrt wird. Das einzelne, dem Belichtungstisch zugeführte Blatt wird von einer Belichtungsquelle belichtet, beispielsweise wie dies in einer Kopiermaschine der Fall ist, oder mittels eines Laserstrahls oder eines sonstigen Lichtstrahls oder eines Elektronenstrahls belichtet oder mit einem sonstigen Teilchenstrahl. Die Belichtungsstation ist insbesondere für die Belichtung von Blättern geeignet, die auf ihrer Oberfläche eine fotoempfindliche Schicht tragen. Während eines typischen Verarbeitungsschrittes wird das von der Blattspendevorrichtung zu dem Belichtungstisch gelieferte Blatt auf diesem mittels iterierender oder fortschreitender Näherungswerte (trial and error) von Luftdüsenstössen mit grosser Genauigkeit bis zum Erreichen einer gewünschten Stellung positioniert. Der Belichtungstisch wird anschliessend unter die Belichtungseinrichtung bewegt. Nach der Belichtung heben Luftströme aus Luftdüsen das Blatt von dem Belichtungstisch ab und dieses tritt aus der Belichtungsstation aus. Es können noch zusätzliche Arbeitsgänge auf dem Belichtungstisch durchgeführt werden, wie beispielsweise das Stanzen von Löchern in das Blatt u. dgl.

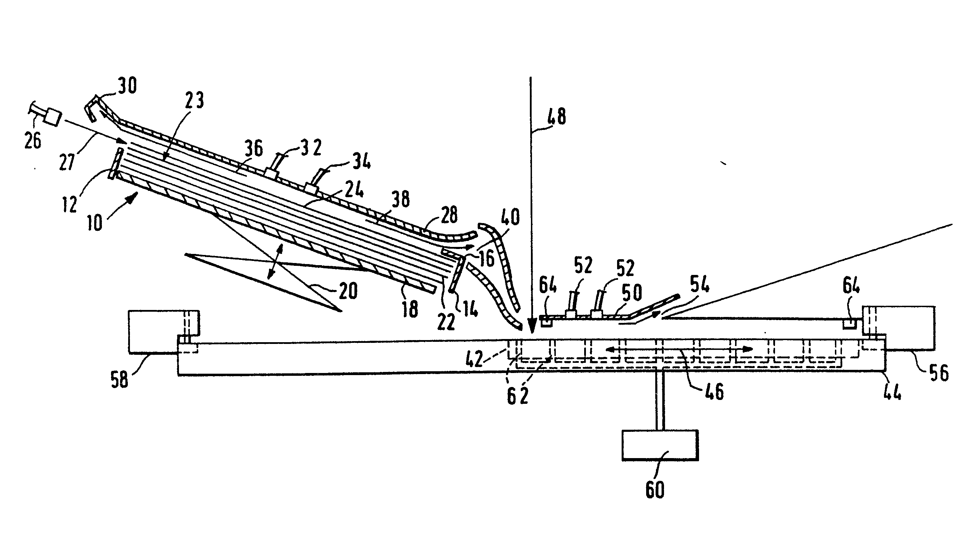

Im folgenden wird das in der Zeichnung dargestellte Ausführungsbeispiel der Erfindung näher erläutert.

Die Figur zeigt eine teilweise geschnittene, schematische Seitenansicht der Belichtungsstation nach der Erfindung. Wie schon zuvor erwähnt wurde, betrifft die Erfindung eine Belichtungsstation mit einer Blattspendevorrichtung für blattförmiges Material wie beispielsweise Papier, Karten, Computerkarten, Kunststoff-Folien, fotoempfindliche Filme, lithografische Druckplatten oder dgl. Die Blattspendevorrichtung umfasst einen Blattbehälter 10, der im wesentlichen rechteckförmig ausgebildet ist und dessen Hinterwand 12, Vorderwand 14 und Seitenwände, die in der Zeichnung nicht dargestellt sind, die Behälterumrandung bilden. Die Vorderwand 14 besitzt einen Vorsprung bzw. eine Lippe 16, die teilweise vorspringt und in das Innere des Behälters hineinragt. Der Behälter besitzt einen beweglichen Boden 18, der durch eine geeignete Einrichtung 20, wie beispielsweise ein Scherenhubwerk, angehoben und abgesenkt wird, so dass sämtliche Blätter 22, die auf dem Boden gestapelt sind, innerhalb der Mitte der Behälterumrandung auf- und abbewegt werden. Im Betrieb ist es erwünscht, das oberste Blatt 24 in der höchstmöglichen Position im Behälter, die erreichbar ist, zu halten, ohne dass das Blatt gegen den Vorsprung 16 anliegt. Nicht dargestellte Detektoren stellen die tatsächliche Position des obersten Blattes sowie die ungefähre Anzahl der noch in dem Behälter vorhandenen Blätter fest. Des weiteren sind Einrichtungen vorgesehen, wie beispielsweise Luftdüsen 26, wie durch einen Pfeil 27 angezeigt ist, um die oberen Blätter anzuheben. In der bevorzugten Ausführungsform sind dies Luftdüsen 26, es kann sich auch nur um eine einzige leicht nach unten in den Blattstapel 23 gerichtete Luftdüse handeln. Dies bewirkt, dass zwischen einigen der oberen Blätter etwas Luft eintritt und dass diese etwas voneinander, wenn auch nicht vollständig, getrennt werden.

Oberhalb des Behälters 10 befindet sich eine rechteckförmige Leitplatte 28 mit Luftdüsen, die an ihrem hinteren Teil einen C-förmigen Blatthalteanschlag 30 aufweist. An der Leitplatte 28 ist eine nach hinten gerichtete Luftdüse 32 und eine nach vorwärts gerichtete Luftdüse 34 befestigt. Selbstverständlich können auch mehr als zwei Luftdüsen an der Platte befestigt sein, von denen jeweils die eine Hälfte nach hinten und die andere Hälfte nach vorne gerichtet ist. Im Betrieb, nachdem die Blätter aufgefächert und durch die Luftdüsen 26 voneinander getrennt sind, wird die Luftdüse 32 aktiviert, die einen Luftstrom hoher Geschwindigkeit und niedrigen statischen Druckes auf die Oberseite des obersten Blattes richtet. Dabei wird ein Druckunterschied aufgebaut, da Luft von geringerer Geschwindigkeit, jedoch höheren statischen Druckes, unter dem obersten Blatt existiert. Dieser Druckunterschied bewirkt, dass das oberste Blatt ähnlich einem Flügel angehoben wird. Die durch den Luftstrom der Luftdüse bewirkte Luftreibung bewegt das oberste Blatt solange nach hinten in die Richtung eines Pfeils 36, bis der hintere Teil des obersten Blattes gegen den Blatthalteanschlag 30 anstösst und die Vorderkante des Blattes von dem Vorsprung 16 gelöst ist. Die im Stapel 23 weiter unten liegenden Blätter werden weder angehoben noch nach hinten bewegt, da sie sich nicht in Kontakt mit dem Luftstrom befinden und sie werden daher auch nicht von dem Vorsprung 16, der sie stoppt, losgelöst.

Nachdem das oberste Blatt in der Blatthalteanschlagposition ist, wird die hintere Luftdüse 32 abgeschaltet und die nach vorne gerichtete Luftdüse 34 aktiviert. Es läuft die zuvor erwähnte Blattanhebe- und Transportaktion ab, nunmehr aber in Vorwärtsrichtung, d.h. in Richtung eines Pfeils 38. Das Blatt durchläuft dann infolge dieser Bewegung eine Austrittsbahn 40, die durch den Vorsprung 16 und den Vorderteil der Leitplatte 28 gebildet ist. Jede Bewegung zum Absenken der obersten Blätter durch die Luftdüse 34 wird durch den Vorsprung 16 gestoppt.

Die Austrittsbahn 40 mündet schwalbenschwanzförmig in Richtung des Belichtungstisches 44, dem die fotoempfindlichen Blätter zugeführt werden, um auf diesem durch eine Belichtungseinrichtung, die nicht dargestellt ist, belichtet zu werden. Der Belichtungstisch 44 umfasst eine Belichtungsplatte 42, die längs einer vorgegebenen Bahn, wie beispielsweise einem Rahmen des Belichtungstisches 44, verschiebbar ist. Die Belichtungsplatte 42 besitzt eine Anzahl von Durchlässen 62, die mit einer Einrichtung 60, beispielsweise einer Unterdruck und Druckluft erzeugenden Pumpe verbunden sind, um ein angeliefertes Blatt faltenfrei auf der Oberfläche der Belichtungsplatte 42 festzuhalten. Die Belichtungsplatte 42 wird durch eine geeignete Einrichtung in Richtung des Doppelpfeils 46 hin- und herbewegt. Ein fotoempfindliches Blatt wird durch einen Belichtungsstrahl 48 belichtet, sobald die Belichtungsplatte sich unter dem Strahl hindurchbewegt, der senkrecht auf die Ebene des Belichtungstisches 44 auftrifft. Der Belichtungsstrahl kann ein Laserstrahl, der Strahl einer gesteuerten Lichtquelle mit einer oder mehreren unterschiedlichen Wellenlängen, ein Elektronenstrahl, ein ionisierter Teilchenstrahl oder dgl. sein.

Oberhalb der Belichtungsplatte 42 befindet sich eine Luftdüsen 52 tragende Platte 50. Die Luftdüsen 52 sind ähnlich den Luftdüsen 32 und 34 aufgebaut. Diese Luftdüsen besitzen einen regulierten Luftstrom und sind so ausgerichtet, dass sie wahlweise aktiviert werden können, um ein genaues und ausreichendes Anheben und eine gerichtete Bewegung einem Blatt mitzuteilen, und dieses auf der Oberfläche der Belichtungsplatte mit grosser Genauigkeit durch ein iteratives, mit fortschreitenden Näherungswerten arbeitendes oder ein sonstiges Steuersystem zu positionieren. Geeignete Positionssensoren 64, beispielsweise Lichtschranken, wirken mit dem Blatt und der Belichtungsplatte 42 zusammen. In der gezeigten Ausführungsform sind die Luftdüsen auf der Platte 50 senkrecht ausgerichtet, um die notwendige Blattpositionierung vorzunehmen. In zweckmässiger Ausgestaltung der Belichtungsstation sind an den sich gegenüberliegenden Enden des Belichtungstisches 44 Einrichtungen 56 und 58, wie beispielsweise Stanzen zum Lochen des Blattes angeordnet.

Während des Betriebes wird ein Blatt durch die Austrittsbahn 40 zu der Belichtungsplatte 42 befördert. Sobald es auf der Belichtungsplatte 42 mittels der Luftdüsen 52 und der Positionssensoren 64 genau ausgerichtet ist, wird ein Vakuum an die Durchlässe 62 der Belichtungsplatte angelegt, um das Blatt festzuhalten. Die Belichtungsplatte bewegt sich dann nach hinten und das darauf befindliche Blatt wird von dem Belichtungsstrahl 48 abgetastet. Sobald die Belichtung beendet ist, wird das Vakuum in den Durchlässen 62 aufgehoben und auf einen Luftstrom umgeschaltet, der die Durchlässe 62 durchströmt und das Blatt leicht anhebt. Eine oder mehrere der Luftdüsen 52 werden eingeschaltet und geben dem Blatt eine nach vorne gerichtete Bewegung, so dass es durch einen Austrittsdurchlass 54 infolge des zuvor beschriebenen Auftriebeffekts auf einen Flügel hindurchbefördert wird. Wenn sich die Belichtungsplatte 42 mit dem Blatt in der hinteren bzw. vorderen Stellung auf dem Belichtungstisch befindet, können beispielsweise mittels der Locheinrichtungen 56 und 58 Löcher in das Blatt gestanzt werden. Sobald das Blatt die Belichtungsstation durch den Austrittsdurchlass 54 verlassen hat, können zusätzliche, nicht gezeigte Luftdüsen das Blatt zu einer weiteren Verarbeitungsstation, wie beispielsweise einer Entwicklungsstation, befördern.

Aus den voranstehenden Ausführungen ist ersichtlich, dass die Zeitfolge der Luftbeaufschlagung, der Luftströme und des Vakuums die Aufeinanderfolge und die unverzügliche Positionierung der Blätter sorgfältig gesteuert werden müssen. Daher werden die Luftströme, die Richtung und die Korrektur der Blattposition durch einen Mikroprozessor gesteuert, der geeignet ist, wahlweise den Luftstrom in den Luftdüsen und Durchlässen zu aktivieren, wobei der Mikroprozessor auf die Blattposition und auf eine vorgegebene Sequenz der Arbeitsabläufe anspricht. Die Erfindung schliesst Abwandlungen des beschriebenen Ausführungsbeispiels innerhalb des Schutzumfangs der Patentansprüche mit ein.

## Patentansprüche

1. Belichtungsstation für fotoempfindliche Materialien, mit einem Belichtungstisch und mit einer Blattspendevorrichtung, die einen rechtekkigen Blattbehälter aufweist, dessen Vorder-, Rück- und Seitenwände die Behälterumrandung bilden, mit einem höhenverstellbaren Boden, der innerhalb der Behälterumrandung anheb- und absenkbar ist, dadurch gekennzeichnet, dass an der Vorderwand (14) des Blattbehälters ein Vorsprung (16) angebracht ist, der in das Innere des Behälters (10) hineinragt, dass eine Leitplatte (28) für einen Luftstrom im Abstand sowie parallel und oberhalb zu der obersten Ebene des Behälters (10) geführt ist, dass die Leitplatte (28) an ihrem hinteren Teil einen Blatthalteanschlag (30) und an der Unterseite zumindest eine nach hinten und zumindest eine nach vorne gerichtete Luftdüse (32 bzw. 34) aufweist, dass der Vorsprung (16) und der Vorderteil der Leitplatte (28) eine Austrittsbahn (40) für die im Behälter (10) gestapelten Blätter bilden, und dass eine Einrichtung (26) zum Vereinzeln und Trennen der Blätter eines Stapels (23) in dem Behälter (10) vorhanden ist.

2. Belichtungsstation nach Anspruch 1, dadurch gekennzeichnet, dass der Belichtungstisch (44), der ein von der Austrittsbahn (40) kommendes Blatt (26) aufnimmt, eine rechteckförmige Belichtungsplatte (42) mit einer Anzahl von Durchlässen (62) aufweist, dass ein Belichtungsstrahl (48) die oberste Ebene des Belichtungstisches senkrecht abtastet, dass Einrichtungen den Belichtungstisch (44) eine vorgegebene Strecke senkrecht zu dem Strahlenpfad hin- und herverschieben, dass eine Einrichtung (62) ein Vakuum oder einen Luftstrom durch die Durchlässe (62) hindurch zum Ansaugen oder Abheben eines Blattes erzeugt, und dass eine Luftdüsen (52) tragende Platte (50) oberhalb und parallel zu der Ebene der Belichtungsplatte angeordnet ist und eine Anzahl der zu der Unterseite der Platte (50) hin offenen Luftdüsen (52) aufweist, die ein Blatt in zueinander senkrechten Richtungen auf der Belichtungsplatte in eine vorgegebene Position bewegen und das Blatt durch einen Austrittsdurchlass (54) befördern können.

3. Belichtungsstation nach Anspruch 2, dadurch gekennzeichnet, dass Einrichtungen (56, 58) zum Lochen eines Blattes an den sich gegenüberliegenden Enden des Belichtungstisches (44) vorhanden sind.

4. Belichtungsstation nach Anspruch 2, dadurch gekennzeichnet, dass Sensoren (64) zum Feststellen der Position des einzelnen Blattes vorgesehen sind.

5. Belichtungsstation nach Anspruch 2, dadurch gekennzeichnet, dass Einrichtungen mit den Durchlässen (62) und Luftdüsen (32, 34, 52) verbunden sind und diese aufeinanderfolgend mit Luftdruck oder Vakuum beaufschlagen bzw. den Luftdruck abschalten.

6. Belichtungsstation nach Anspruch 1 oder 2, dadurch gekennzeichnet, dass die Steuerung des Luftstroms und des Vakuums in den Durchlässen (62) und in den Luftdüsen (32, 34, 52) mittels eines Mikroprozessors erfolgt, der auf die Blattposition und eine vorgegebene Reihenfolge der Arbeitsabläufe anspricht.

7. Belichtungsstation nach Anspruch 2, dadurch gekennzeichnet, dass Einrichtungen (56, 58) zum Stanzen von Löchern in dem Blatt, Sensoren (64) zum Feststellen der Position des Blattes sowie Einrichtungen zum aufeinanderfolgenden Beaufschlagen mit Luftdruck und/oder Vakuum durch die Luftdüsen (32, 34, 52) und die Durchlässe (62) vorhanden sind.

## Claims

1. Exposure device for photosensitive materials, with an exposure frame and a sheet dispenser, which has a rectangular sheet reservoir, whose front, rear and side walls form the reservoir perimeter and with a vertically adjustable floor, which can be raised and lowered within the reservoir perimeter, characterized in that a lip (16) is provided on the front wall (14) of the sheet reservoir (10) and projects into the interior of the latter, that an airjet plate (28) is guided in spaced, parallel manner above the uppermost plane of reservoir (10), that plate (28) is provided in its rear portion with a sheet stop catch (30) and on the underside with at least one rearwardly directed and at least one forwardly directed airjet (32, 34), that lip (16) and front portion of plate (28) form an exit path (40) for the sheets stacked in reservoir (10) and that a device (26) is provided for the rippling and separating of the sheets of a stack (23) in reservoir (10).

2. Exposure device according to claim 1, characterized in that the exposure frame (44), which receives a sheet (26) coming from the exit path (40) has a rectangular exposure platen (42) with a plurality of passageways (62), that an exposure beam (48) vertically scans the uppermost plane of the exposure frame, that devices move the exposure frame (44) backwards and forwards over a given distance at right angles to the beam path, that a device (62) produces a vacuum or an air flow through the passageways (62) for the suction or raising of a sheet and that a plate (50) carrying airjets (52) is positioned above and parallel to the exposure platen plane and has a plurality of airjets (52) open towards the underside of plate (50) and move a sheet in directions at right angles to one another on the exposure platen into a given position and can convey the sheet through an exit passageway (54).

3. Exposure device according to claim 2, characterized in that devices (56, 58) are provided for perforating a sheet at the opposite ends of the exposure frame (44).

4. Exposure device according to claim 2, characterized in that sensors (64) are provided for establishing the position of the individual sheet.

5. Exposure device according to claim 2, characterized in that devices are connected to the passageways (62) and airjets (32, 34, 52) and successively subject them to the action of the air pressure or vacuum or cut off the air pressure.

6. Exposure device according to claims 1 or 2, characterized in that the control of the air flow and the vacuum in the passageways (62) and in the airjets (32, 34, 52) takes place by means of a microprocessor, which responds to the sheet position and a given order to the operating sequences.

7. Exposure device according to claim 2, characterized in that devices (56, 58) are provided for punching holes in the sheet, sensors (64) are provided for establishing the position of the sheet and devices are present for successively providing an air pressure and/or vacuum action through the airjets (32, 34, 52) and the passageways (62).

## Revendications

1. Poste d'exposition pour matière photosensible, comprenant une table d'exposition et un dispositif distributeur de feuilles qui comprend un récipient à feuilles rectangulaire dont la paroi avant, la paroi arrière et les parois latérales forment l'entourage du récipient, et qui est muni d'un fond réglable en hauteur qui peut s'abaisser et s'élever à l'intérieur de l'entourage du récipient, caractérisé en ce qu'à la paroi avant (14) du récipient à feuilles est agencée une saillie (16) qui s'engage dans le volume intérieur du récipient (10), en ce qu'une plaque déflectrice (28) destinée à agir sur un flux d'air est disposée à une certaine distance du plan extrême supérieur du récipient (10) ainsi que parallèlement à ce plan et au-dessus de ce plan, en ce que la plaque déflectrice (28) présente, dans sa partie arrière, une butée (30) de retenue des feuilles, et sur sa face inférieure, au moins une buse d'air orientée vers l'arrière et au moins une buse d'air orientée vers l'avant (32 et 34 respectivement), en ce que la saillie (16) et la partie avant de la plaque déflectrice (28) forment un couloir de sortie (30) pour les feuilles empilées dans le récipient (10) et en ce qu'il est prévu un dispositif (26) servant à diviser et à séparer les feuilles d'une pile (23) contenue dans le récipient (10).

2. Poste d'exposition selon la revendication 1, caractérisé en ce que la table d'exposition (44), qui reçoit une feuille (26) provenant du couloir de sortie (40), présente une plaque d'exposition rectangulaire (42) munie d'un certain nombre de passages (62), en ce qu'un faisceau d'exposition (48) explore verticalement le plan extrême supérieur de la table d'exposition, en ce que des dispositifs déplacent la table d'exposition (44) en translation alternative sur une distance prédéterminée perpendiculairement au trajet du faisceau, en ce qu'un dispositif (62) engendre un vide ou un courant d'air transmis à travers les passages (62) pour appliquer ou soulever une feuille, et en ce qu'une plaque (50) portant des buses d'air (52) est disposée au-dessus du plan de la plaque d'exposition et parallèlement à ce plan, et présente un certain nombre de buses d'air (52) qui débouchent sur la face inférieure de la plaque (50), qui peuvent amener une feuille à une position prédéterminée en la déplaçant dans des directions perpendiculaires entre elles sur la plaque d'exposition et peuvent transporter la feuille à travers un passage de sortie (54).

3. Poste d'exposition selon la revendication 2, caractérisé en ce qu'il comprend des dispositifs (56, 58) servant à perforer une feuille aux extrémités opposées de la table d'exposition (44).

4. Poste d'exposition selon la revendication 2, caractérisé en ce qu'il comprend des capteurs (64) servant à capter la position de chaque feuille.

5. Poste d'exposition selon la revendication 2, caractérisé en ce que des dispositifs sont reliés au passage (62) et aux buses d'air (32, 34, 52) et leur appliquent successivement une pression d'air ou un vide ou mettent la pression d'air hors d'action.

6. Poste d'exposition selon la revendication 1 ou la revendication 2, caractérisé en ce que la commande du flux d'air et du vide dans les passages (62) et dans les buses d'air (32, 34, 52) est assurée par un micro-processeur qui répond à la position de la feuille et à une succession prédéterminée des opérations de travail.

7. Poste d'exposition selon la revendication 2, caractérisé en ce qu'il comprend des dispositifs (56, 58) destinés à percer des trous dans la feuille, des capteurs (64) destinés à capter la position de la feuille, ainsi que des dispositifs destinés à appliquer successivement une pression d'air et/ou un vide aux buses d'air (32, 34, 52) et à travers les passages (62).